# EUROPÄISCHE PATENTSCHRIFT

(11) **EP 1 626 602 B1**
(45) Veröffentlichungstag und Bekanntmachung des Hinweises auf die Patenterteilung: **23.04.2008**
(21) Anmeldenummer: 05017067.9
(22) Anmeldetag: 05.08.2005
(51) Int. Cl.: H04Q 7/38

(54) **Verwalten von Kommunikationsverbindungen in einem Mobilfunksystem unter Verwendung von mehreren Teilnehmerprofilen**
Administration of communication links in a radio communication system using multiple subscriber profiles
Administration des connections de communication dans un système de radiocommunication faisant appel a plusieurs profils d'abonnes

(30) Priorität: 10.08.2004 DE 102004038833
(43) Veröffentlichungstag der Anmeldung: 15.02.2006
(73) Patentinhaber: Vodafone Holding GmbH, 40213 Düsseldorf (DE)
(72) Erfinder: Dietz, Ulrich, Dipl.-Ing., 81669 München (DE); Schuster, Wolfgang, Dipl.-Wi-Ing. (FH), 81377 München (DE)
(74) Vertreter: Müller, Thomas

(56) Entgegenhaltungen:
- DE-A1- 19 823 074
- US-A- 6 108 540
- US-A1- 2003 157 938
- US-B1- 6 603 969
- MOULY M ET AL: "MOBILITY AND SECURITY MANAGEMENT" GSM SYSTEM FOR MOBILE COMMUNICATIONS, LASSAY-LES-CHATEAUX, EUROPE MEDIA, FR, 1993, Seiten 432-498, XP000860007

## Beschreibung

Die vorliegende Erfindung betrifft zunächst ein System zur Verwaltung von Kommunikationsverbindungen gemäß dem Oberbegriff von Patentanspruch 1. Weiterhin betrifft die Erfindung ein Verfahren zur Verwaltung von Kommunikationsverbindungen gemäß dem Oberbegriff von Patentanspruch 10.

In modernen Kommunikationsnetzwerken wird eine Kommunikationsverbindung zwischen zwei oder mehreren Kommunikationsendgeräten in der Regel auf der Grundlage von diesen Geräten zugewiesenen Kennziffern aufgebaut. In Mobilfunknetzen handelt es sich bei diesen Kennziffern um so genannte Mobilnummern beziehungsweise MSISDN (Mobile Subscriber Integrated Services Digital Number). Zur Authentifizierung eines Kommunikationsendgerätes in dem Kommunikationsnetz werden hierbei Authentifizierungsmittel verwendet, die jeweils mindestens einem Kommunikationsendgerät zugeordnet werden können. Bei Mobilfunknetzen können diese Authentifizierungsmittel beispielsweise die so genannten SIM (Subscriber Identiy Module)-Karten darstellen. Jeder SIM-Karte ist in der Regel eine Kennziffer, zum Beispiel eine IMSI (International Mobile Subscriber Identity), insbesondere eine Mobilnummer beziehungsweise MSISDN, zugeordnet. Mittels dieser Kennummer können Kommunikationsverbindungen von dem Kommunikationsendgerät aus initiiert werden, oder es können Kommunikationsverbindungen, die von anderen Kommunikationsendgeräten aus gestartet wurden, auf dieses Kommunikationsendgerät geleitet werden. Das Authentifizierungsmittel, dem die Kennziffer zugeordnet ist, dient hierbei zum einen der Anmeldung und gegebenenfalls der Berechtigungsüberprüfung gegenüber dem Netzwerk. Zum anderen repräsentiert das Authentifizierungsmittel gleichzeitig das Konto, über das die Kommunikationsverbindung hergestellt werden soll.

Mit der verbreiteten Verwendung von Kommunikationsmöglichkeiten sind auch die Anforderungen der Nutzer gestiegen. Insbesondere für Nutzer eines Kommunikationsnetzes, die dieses zu unterschiedlichen Zwecken nutzen möchten, haben sich die bisher bekannten Lösungen als nachteilig, insbesondere hinsichtlich des Bedienungskomforts, ergeben.

Will ein Nutzer eines Kommunikationsnetzwerkes dieses beispielsweise sowohl geschäftlich als auch privat nutzen, so muss dieser in der Regel zwei unterschiedliche Authentifizierungsmittel hierfür besitzen. Das Erfordernis der unterschiedlichen Authentifizierungsmittel ergibt sich zum einen aufgrund des Wunsches nach Wahrung der Privatsphäre. Der Nutzer kann in dem Fall, in dem er zwei Authentifizierungsmittel besitzt entscheiden, welche der den Authentifizierungsmitteln zugewiesenen Mobilnummern er einem potentiellen Kommunikationspartner zur Verfügung stellen will. Nur so kann eine Trennung zwischen Beruf und Privatleben eingehalten werden.

Zum anderen kann die Verwendung eines einzigen Authentifizierungsmittels mit entsprechender Kennziffer zu Problemen bei der Abrechnung führen, da sich bei der Verwendung von nur einem Authentifizierungsmittel mit nur einer Kennziffer lediglich erkennen lässt, inwieweit das Kommunikationsnetz verwendet wurde. Es ist allerdings nicht möglich zu erkennen, ob diese Nutzung privater oder beruflicher Natur war. Der Nutzer ist somit gezwungen, mehrere Authentifizierungsmittel abwechselnd in einem Kommunikationsendgerät zu verwenden, wobei er das Authentifizierungsmittel jeweils austauschen muss, da die Kommunikationsendgeräte in der Regel nur zur Aufnahme von einem Authentifizierungsmittel ausgelegt sind. Alternativ muss der Nutzer mehrere Kommunikationsendgeräte bedienen.

Somit hat sich das Bedürfnis ergeben, die Nutzung eines Kommunikationsnetzwerkes sowohl für den Nutzer als auch für den Netzwerkbetreiber, insbesondere den Mobilfunknetzwerkbetreiber (MNO), möglichst flexibel und komfortabel zu gestalten.

Es wurde im Stand der Technik bereits vorgeschlagen, dem Mobilfunknutzer zwei Mobilfunknummern auf einem einzigen mobilen Kommunikationsendgerät mit einem Authentifizierungsmittel zur Verfügung zu stellen. Dies kann beispielsweise durch das Produkt DuoBill der Anmelderin ermöglicht werden. Dem Nutzer werden hierbei zwei GSM-Anschlüsse beziehungsweise zwei so genannte Konten, denen jeweils eine Kennziffer, insbesondere eine eigene Mobilnummer zugeordnet ist, zugewiesen. Der Nutzer kann zwischen diesen Konten wählen, ohne die SIM-Karte in seinem Kommunikationsendgerät austauschen zu müssen. Um dies zu ermöglichen, werden auf einer physikalischen SIM-Karte zwei SIM-Applikationen vereinigt, denen jeweils eine eigene Telefonnummer (MSISDN) zugeordnet ist. Durch entsprechende Eingabe eines Codes zum Aktiveren einer SIM-Applikation, insbesondere durch Eingabe eines PINs, beim Einschalten des Kommunikationsendgerätes kann zwischen den beiden SIM-Applikationen gewählt werden und das mobile Kommunikationsendgerät mit der einen oder anderen SIM-Applikation - und dadurch mit einer der Mobilfunknummern - ins Netz eingebucht werden. Durch die Erstellung zweier eigenständiger Konten, die auch unterschiedliche Mobilfunkrechnungen gegebenenfalls mit unterschiedlichen Rechnungsadressen umfassen können, ist eine Kostentransparenz für den Benutzer gewährleistet und es wird eine Trennung privater und geschäftlicher Konten möglich, wobei die Privatsphäre gewahrt bleibt.

Bucht sich ein Nutzer mittels einer der SIM-Applikationen über eine Mobilnummer in das Kommunikationsnetzwerk ein, so ist die jeweils andere SIM-Applikation zu diesem Zeitpunkt inaktiv. Ein automatisches Weiterleiten von Telefonaten, die für die inaktive Mobilnummer eingehen, auf die aktive Mobilnummer, kann mit dieser bekannten Lösung bisher noch nicht erfolgen.

Die DE 198 23 074 A1 zeigt ein Mobilfunk-Kommunikationsnetz mit einem Verwaltungssystem für Kommunikationsverbindungen. In einem Endgerät können mehrere verschiedene SIM-Karten nebeneinander oder im Austausch verwendet werden oder alternativ mehrere Profile auf einer SIM-Karte eingerichtet sein. Der Vorteil liegt darin, dass eine einzelne Endgerät, in die mehrere Karten oder Profile geladen sind, die zu verschiedenen Benutzern gehören, von den verschiedenen Benutzern gemeinsam verwendet werden. Für abgeschaltete oder deaktivierte SIMs sind keinerlei Funktion vorgesehen, mit Ausnahme, dass eine zeitgleiche Nutzung von zwei SIMs ist möglich, nämlich für einen von dem Mobilteil ausgehenden Anruf.

Die US2003/157983 A1 betrifft eine Verwaltungseinerichtung mit einer Schnittstelle zur Verbindung mit anderen Kommunikationsnetzten (UMTS), insbesondere dem Internet.

Aufgabe der vorliegenden Erfindung ist es somit, ein System und ein Verfahren bereit zu stellen, mit denen die Verwaltung von unterschiedlichen Nutzungen eines einzelnen Kommunikationsendgerätes eines Kommunikationsnetzwerkes oder Nutzungen unterschiedlicher Kommunikationsendgeräte auf einfache Weise realisiert werden kann.

Der Erfindung liegt die überraschende Erkenntnis zugrunde, dass dies erzielt werden kann, indem eine Authentifizierung von Kommunikationsendgeräten in einem Kommunikationsnetzwerk und die Verwaltung von Konten eines Nutzers separat voneinander erfolgen. Der Nutzer hat Zugriff auf mehrere Konten und benötigt nur ein Authentifizierungsmittel.

Die Aufgabe wird erfindungsgemäß gelöst durch das System mit den Merkmalen gemäß dem unabhängigen Patentanspruch 1 sowie das Verfahren mit den Merkmalen gemäß dem unabhängigen Patentanspruch 10. Weitere Vorteile, Merkmale, Details, Aspekte und Effekte der Erfindung ergeben sich aus den Unteransprüchen, der Beschreibung sowie der Zeichnung. Merkmale und Details, die im Zusammenhang mit dem erfindungsgemäßen System beschrieben sind, gelten dabei selbstverständlich auch im Zusammenhang mit dem erfindungsgemäßen Verfahren, und umgekehrt.

Die Aufgabe wird daher gemäß einem ersten Aspekt gelöst durch ein System zur Verwaltung von Kommunikationsverbindungen in einem Kommunikationsnetzwerk, wobei das System zumindest eine netzwerkseitige Verwaltungseinrichtung aufweist, die zum Informationsaustausch mit mindestens einem Kommunikationsendgerät, zu dem oder von dem die Kommunikationsverbindung aufgebaut werden soll, ausgelegt ist, wobei das System mindestens ein Authentifizierungsmittel und mindestens eine Identifizierungseinheit mit einer Speichervorrichtung für Identifizierungsdaten aufweist, wobei dass mindestens ein Authentifizierungsmittel mindestens einem Kommunikationsendgerät zugeordnet ist und die mindestens eine netzwerkseitige Verwaltungseinrichtung die mindestens eine Identifizierungseinheit umfasst. Das System ist dadurch gekennzeichnet, das die Identifizierungsdaten Augaben zu Kommunikationsendgeräten oder Augaben bezüglich des Benutzers und Augaben zu Kommunikationsendgeräten darstellen, und wobei die Identifizierungsdaten in einem Profil abgelegt sind und das Profil mehrere Konten umfasst.

Unter Verwaltung wird im Sinne dieser Erfindung insbesondere das Herstellen, Unterbrechen, Weiterleiten und/oder Überwachen einer Kommunikationsverbindung verstanden.

Das Authentifizierungsmittel dient bei dem erfindungsgemäßen System insbesondere zur Anmeldung des Benutzers beziehungsweise des Kommunikationsendgerätes, dem das Authentifizierungsmittel zugeordnet ist, in dem Kommunikationsnetzwerk.

Die Erfindung ist nicht auf bestimmte Typen von Authentifizierungsmitteln beschränkt. Bei den Authentifizierungsmitteln kann es sich beispielsweise um hardware- und/oder softwarebasierte Module und dergleichen handeln. Vorteilhaft kann das Authentifizierungsmittel eine Chip-Karte mit darauf gespeicherten Informationen, insbesondere eine SIM-Karte, sein. Hierbei können der Karte eine oder mehrere SIM-Applikationen zugeordnet sein.

Für die Weiterentwicklung in UMTS-Netzwerken steht heute die USIM-Karte zur Verfügung. Die zusätzliche ISIM-Applikation ermöglicht den Zugang zu IMS-Netzwerken (IP Multimedia Subsystem).

Durch das Vorsehen einer Authentifizierungs- und einer separaten Identifizierungseinheit wird es erfindungsgemäß ermöglicht, Kriterien für die Authentifizierung oder die Identifizierung zu ändern, ohne eine Änderung der Kriterien für den jeweils anderen Vorgang vornehmen zu müssen. Insbesondere können durch diese Aufteilung die Authentifizierung und die Identifizierung flexibel ausgelegt und entsprechenden Anforderungen angepasst werden.

Bei dem erfindungsgemäßen System ist die Verwaltungseinrichtung netzseitig vorgesehen. Diese Verwaltungseinrichtung kann beispielsweise wenigstens einen Server darstellen, auf dem die Identifikationseinheit hinterlegt ist. Es ist erfindungsgemäß auch möglich, mehrere Identifikationseinheiten auf einer Verwaltungseinrichtung vorzusehen. Durch die netzseitige Anordnung ergibt sich der Vorteil, dass beispielsweise Informationen, die im Netzwerk, zum Beispiel in Datenbanken abgelegt sind, bei der Identifizierung auf einfache Weise einbezogen werden können. Diese Informationen können beispielsweise Telefonbücher oder andere Datensammlungen sein.

Durch die netzseitige Anordnung der Identifizierungseinheit ist die vorliegende Erfindung zudem nicht auf eine bestimmte Art eines Kommunikationsnetzwerkes beschränkt. Dies gilt sowohl für das so genannte Heimnetzwerk als auch für Roaming-Netzwerke.

Mit der vorliegenden Erfindung können Kommunikationsverbindungen in und mit GSM, GPRS, UMTS, WLAN und weiteren Netzwerk-Arten ermöglicht werden. Vorteil gegenüber dem Stand der Technik ist somit, dass die Kommunikation nicht auf ein bestimmtes Netz, z.B. GSM-Netz beziehungsweise die Anwendung in diesem Netz, das heißt Services aus einem bestimmten Netz, begrenzt ist. Auch IP-basierte Services können mit der vorliegenden Erfindung genutzt werden.

Erfindungsgemäß weist die Verwaltungseinrichtung eine Speichervorrichtung für Identifizierungsdaten auf. Diese kann in der Verwaltungsvorrichtung integriert oder damit verbunden sein.

Die Identifizierungsdaten können unter anderem Angaben bezüglich des Benutzers und/oder Angaben zu Kommunikationsendgeräten darstellen. Die Angaben bezüglich des Benutzers können insbesondere eine oder mehrere diesem zugewiesenen Kennzeichen, insbesondere Mobilnummern, e-mail-Adressen, IRC (Internet-Relay-Chat)-Nummer, Instant Messaging (IM) und dergleichen sein. Weiterhin können Präferenzen des Benutzers bezüglich zu erzeugender Kommunikationsverbindungen hinterlegt sein. Schließlich können die Angaben bezüglich des Benutzers auch Angaben bezüglich Abrechnungsmodalitäten umfassen.

Die Angaben bezüglich des Benutzers sind in dem Profil in so genannte Konten eingeteilt. Die Aufteilung der Angaben in Konten erfolgt vorzugsweise entsprechend der unterschiedlichen Rollen, in denen ein Benutzer das Kommunikationsnetzwerk nutzen will. Diese Rollen können beispielsweise private, berufliche, ehrenamtliche Posten, oder andere Rollen sein. Selbstverständlich ist die Erfindung nicht auf bestimmte Rollen eines Nutzers beschränkt. Zur Verdeutlichung der Erfindung wird nachfolgend jedoch verschiedentlich auf die genannten, nicht ausschließlichen Beispiele bezug genommen.

Die Angaben zu den Kommunikationsendgeräten können insbesondere entsprechende Kennungen des Kommunikationsendgerätes sowie die Fähigkeit der Kommunikationsendgeräte zur Ausgabe oder Weiterleitung von Informationen sein. So kann ein Mobiltelefon, das eine Ausgabe von E-mails nicht erlaubt, entsprechend gekennzeichnet sein. Die Angaben zu den Kommunikationsendgeräten eines Benutzers können zusammen mit eingerichteten Konten für einen Benutzer in einem Profil abgelegt werden.

Die Kosten, die für Verbindungen anfallen, werden erfindungsgemäß automatisch entsprechend dem Profil einem bestimmten Konto innerhalb des Profils zugeordnet. Gemäß einer Ausführungsform ist es möglich Kosten, die aufgrund eines Profils einem bestimmten Konto zugeordnet wurden, manuell vor dem Gespräch oder nach dem Gespräch umzukategorisieren, das heißt einem anderen Konto zuzuordnen.

Bei dem erfindungsgemäßen System ist die Anzahl der für einen Nutzer einrichtbaren Konten prinzipiell unbeschränkt. Dies ist zum einen aufgrund des in der Regel im Netzwerk, beispielsweise auf einem Server, ausreichend vorhandenen Speicherplatzes und zum anderen aufgrund der Art der Verwendung der Konten möglich. Diese werden bei dem erfindungsgemäßen System nicht für die Authentifizierung verwendet. Eine Übertragung der in den Konten enthaltenen Identifizierungsdaten von oder zu einem Authentifizierungsmittel in einem Kommunikationsendgerät ist daher nicht notwendig. Die Konteninformationen können daher umfangreich sein.

Während es durch andere Alternativen aus dem Stand der Technik möglich ist eventuell zwei Konten auseinander zu halten, ist mit dem erfindungsgemäßen Verfahren eine Begrenzung der Anzahl der Konten nicht gegeben. Eine Begrenzung kann allenfalls aufgrund der Praktikabilität eingeführt werden. Aus technischen Gründen kann die Anzahl der Konten auf beispielsweise acht und die Anzahl der dem Profil zugeordneten Kommunikationsendgeräte auf zehn begrenzt werden.

Sind mehrere Konten vorgesehen, so kann mit der vorliegenden Erfindung ein Konto entweder in Abhängigkeit des Inhalts oder des Services entsprechend auf die unterschiedlichen Kommunikationsendgeräte aufgeteilt sein. Hierbei können beispielsweise E-mail automatisch nur an solche Geräte geleitet werden, die zum Empfang von E-mails ausgerüstet sind.

Die Identifikationseinheit ist vorzugsweise so ausgestaltet, dass eine entsprechende Anzahl von Mail-Boxes für die in einem Profil eingerichteten Kontos zur Verfügung gestellt wird. Auch eine Speichereinheit für SMS, EMS, MMS oder sonstige Dienste kann erfindungsgemäß zur Verfügung gestellt werden.

Die Identifizierungseinheit dient vorzugsweise zur Festlegung von Eigenschaften einer aufzubauenden Kommunikationsverbindung. Als Kommunikationsverbindung werden sowohl eine Gesprächsverbindung, eine Verbindung zum Datenaustausch, Datendienste oder beliebige Kombinationen daraus verstanden. Eigenschaften, die einer solchen Kommunikationsverbindung zugeordnet werden können, umfassen insbesondere die für die Verbindung notwendigen Eigenschaften, wie beispielsweise den Kommunikationspartner und geeignete Mittel für die Kommunikationsverbindung, insbesondere geeignete Kommunikationsendgeräte. Diese Eigenschaften können erfindungsgemäß in einem Profil abgelegt sein.

Da die Identifizierungseinheit netzwerkseitig vorgesehen ist, ist beispielsweise die Möglichkeit gegeben, Status-, Anwesenheits- (Presence)- oder andere Informationen der Kommunikationsendgeräte oder sonstiger Netzwerkkomponenten, die sich auf das Kommunikationsendgerät auswirken, zu verknüpfen.

Weiterhin wird es durch die netzwerkseitige Anordnung der Verwaltungseinrichtung möglich, auf die Identifizierungseinheit von einer anderen Komponente als dem Kommunikationsendgerät zuzugreifen. Dies erhöht die Flexibilität des erfindungsgemäßen Systems.

In einer bevorzugten Ausführungsform ist das Profil in einer Matrix organisiert. Hierdurch kann eine Anzahl von Beziehungen zwischen Angaben bezüglich des Benutzers und den Angaben bezüglich der Kommunikationsendgeräte erzeugt werden. Zudem kann hierdurch eine schnelle Zuordnung von Eigenschaften einer Kommunikationsverbindung erfolgen.

Mittels einer zweidimensionalen Matrix, in der die Konten und die Kommunikationsendgeräte eines Benutzers hinterlegt sind, kann mit der erfindungsgemäßen Verwaltungseinrichtung eine große Anzahl von Kommunikationsendgeräten verwaltet werden. Da die Anzahl der Kommunikationsendgeräte und die Anzahl der Konten erfindungsgemäß nicht begrenzt sind, ist das erfindungsgemäße System skalierbar und kann den Wünschen einzelner Nutzer entsprechend angepasst werden.

In dem erfindungsgemäßen System kann weiterhin eine Speichereinheit für Kontaktdaten in dem Profil vorgesehen sein. Diese Speichereinheit ist vorzugsweise horizontal aufgebaut. Dies bedeutet, dass jedem Konto ein gewisser Satz an Kontaktdaten zugeordnet ist. Wird ein Konto inaktiviert können dann beispielsweise nur die Kontaktdaten der anderen noch aktiven Konten angezeigt werden. Diese Daten können nach verschiedenen Kriterien, wie beispielsweise Häufigkeit, Tageszeit, besondere Orte oder Ähnliches, sortiert und angezeigt werden. Dies erhöht die Überschaubarkeit der anzuzeigenden Daten. Vorzugsweise können aber auch bei einem inaktivierten Konto die diesem zugeordneten Kontakte manuell aktiviert werden ohne das Konto aktivieren zu müssen.

Gemäß einer bevorzugten Ausführungsform umfasst die Identifizierungseinheit eine Bearbeitungseinheit zum Bearbeiten von Kommunikationsverbindungsanfragen und zur Auswahl von Identifizierungsdaten.

Kommunikationsverbindungsanfragen können eingehende, das heißt an den Benutzer, dessen Identifikationsdaten in dem Profil abgelegt sind, gerichtete und ausgehende, das heißt von dem Benutzer zu initiierende Kommunikationsverbindungen, sein.

In der Bearbeitungseinheit kann insbesondere eine Zuordnung einer Kommunikationsverbindungsanfrage zu einem der Konten, die in der Matrix abgelegt sind, erfolgen. Die Zuordnung erfolgt vorzugsweise unter Berücksichtigung von weiteren in dem Profil hinterlegten Identifikationsdaten. Diese weiteren Identifikationsdaten können beispielsweise Präferenzen des Benutzers, Regeln, die durch den Benutzer eingestellt, oder durch das System vorgegeben sind, oder Kontaktdaten aus einem Telefonbuch sein.

Vorteilhaft ist in der Bearbeitungseinheit auch eine Steuerungslogik vorgesehen. Diese Steuerungslogik dient beispielsweise zur Auswahl von Identifikationsdaten, insbesondere zur Auswahl der Konten.

Die Verwaltungseinrichtung weist vorzugsweise zumindest eine Schnittstelle für den Zugriff auf die Verwaltungseinrichtung über das Internet auf. Durch eine solche Schnittstelle wird die Pflege der in der Verwaltungseinrichtung hinterlegten Daten von unterschiedlichen Orten gezielt ermöglicht. Insbesondere können mittels dieser Schnittstelle beispielsweise einem Profil oder einem darin enthaltenen Konto zugeordnete Eigenschaften verändert, hinzugefügt oder gelöscht werden. Da die Verwaltungseinrichtung unabhängig von dem Authentifizierungsmittel ist, kann ein Benutzer durch eine solche Schnittstelle beispielsweise auch für andere, insbesondere derzeit nicht im Netzwerk authentifizierte, Kommunikationsendgeräte Modifikationen vornehmen. Weiterhin kann über diese Schnittstelle auch von Dritten auf die Verwaltungseinrichtung zugegriffen werden, selbst wenn diese zu dem Zeitpunkt nicht im Besitz eines der Kommunikationsendgeräte sind. Hierdurch kann eine zentrale Verwaltung der Identifikationsdaten ermöglicht werden.

So können beispielsweise von einem Unternehmen die Kontaktdaten auf allen geschäftlichen Konten der Mitarbeiter regelmäßig auf den neuesten Stand gebracht werden, wohingegen dem Unternehmen ein Zugriff auf die persönlichen Konten nicht zusteht. Auch andere Daten, wie Zugangsdaten könnten in einem solchen Fall vom Unternehmen verwaltet werden, wenn sich beispielsweise die VPN (Virtual Private Network)-Zugangsdaten, Short-Codes und dergleichen bezüglich einer SIM-Karte oder eines Kommunikationsendgerätes ändern.

Ein weiterer Vorteil des Vorsehens einer Schnittstelle zum Internet besteht darin, dass die Bearbeitung von Einstellungen an der Verwaltungseinrichtung beispielsweise über einen PC erfolgen kann. Dieser weist im Vergleich zu Kommunikationsendgeräten, die beispielsweise ein Mobiltelefon sein können, eine bessere Benutzeroberfläche (GUI) auf.

Das System kann erfindungsgemäß aber außer über die Web-Schnittstelle auch von dem oder einem der Kommunikationsendgeräte aus verwaltet werden. Hierdurch wird die Bedienung noch zusätzlich erleichtert. Für kleine Änderungen muss sich der Benutzer nämlich nicht im Internet zu der Verwaltungseinrichtung einwählen, wohingegen bei einer größeren Änderung oder Änderungen durch eine Person, die nicht im Besitz des Kommunikationsendgerätes ist, die Verwaltung beispielsweise über einen Computer mit der dafür besser ausgelegten Benutzeroberfläche erfolgen kann.

Weiterhin können durch das zur Verfügung stellen einer Web-Schnittstelle unterschiedliche Ansichten, wie beispielsweise die Historie, On-line Rechnungen und dergleichen eingestellt werden.

Besonders bevorzugt ist ein Bestandteil des Kommunikationsnetzes als Mobilfunknetz ausgebildet. Besonders bevorzugt handelt es sich bei diesem Mobilfunknetz um ein UMTS-Netz. Die Verwaltungseinrichtung kann hierbei die Funktionalitäten des zur Verfügung stehenden IMS-Systems (IP Multimedia Subsystem) nutzen. Das IMS-System ermöglicht die Unterstützung von IP-Multimedia-Anwendungen insbesondere innerhalb des UMTS Systems. Somit kann das erfindungsgemäße System flexibler eingesetzt werden, da auch Dienste, die auf Internet-Anwendungen, Internet-Diensten und Internet-Protokollen, wie beispielsweise SIP (Session Initiation Protocol), basieren oder auf diesen aufgebaut sind, verwendet werden können.

Die Nutzung des erfindungsgemäßen Systems schließt auch die Nutzung in fremden Netzwerken (Roamingfall) und die Nutzung in nicht IMS-basierten Systemen mit ein.

Die Erfindung ist nicht auf bestimmte Typen von Kommunikationsendgeräten beschränkt. Vorzugsweise stellen die Kommunikationsendgeräte aber mobile Einheiten dar. Beispielsweise kann es sich bei dem Kommunikationsendgerät um einen transportablen Computer, beispielsweise einen Laptop, einen Personal Digital Assistent (PDA), Blackberry ® oder dergleichen handeln. Die Kommunikationsverbindung ist somit nicht auf Verbindungen zwischen Mobiltelefonen beschränkt ist, sondern es können auch andere Vorrichtungen, die Mobile-Verbindungskarten verwenden, benutzt werden.

An dem Kommunikationsendgerät kann erfindungsgemäß eine Anzahl von Funktionalitäten vorgesehen sein. Diese werden vorzugsweise über eine geeignete Software auf dem Kommunikationsendgerät erzielt, so dass das erfindungsgemäße Verfahren und das erfindungsgemäße System mit herkömmlichen mobilen Kommunikationsendgeräten ausgeführt beziehungsweise realisiert werden können.

An dem Kommunikationsendgerät kann beispielsweise die Funktionalität eingerichtet werden, dass eingehende und ausgehende Kommunikationsverbindungen entsprechend dem Profil angezeigt werden. So können beispielsweise unterschiedliche Klingeltöne, Bilder, Farben und dergleichen für jeden der eingerichteten Konten verwendet werden. Beispielsweise kann das Kommunikationsendgerät so eingestellt sein, dass beim Eingang eines geschäftlichen Gespräches ein Klingelton ausgegeben wird, während beim Eingang eines privaten Gespräches nur ein Vibrationsmechanismus ausgelöst wird.

Weiterhin ist das Kommunikationsendgerät erfindungsgemäß vorzugsweise so ausgestaltet, dass dieses mehr als einen eingehenden Anruf verwalten kann. So können mittels des Kommunikationsendgerätes Weiterleitungen oder Warte-Töne erzeugt werden. Auch eine Anklopf-Funktion kann vorgesehen sein. Darüber hinaus ist es auch möglich, dass gleichzeitig eingehende Anrufe unterschiedlicher Kategorien mit unterschiedlichen Prioritäten bezüglich des Gesprächshandlings ausgestattet sind/werden.

Zudem kann die dem Kommunikationsendgerät beispielsweise durch eine entsprechende Software eine Management-Funktionalität implementiert werden. Diese Funktionalität soll es dem Nutzer ermöglichen das Profil, das in der Verwaltungseinheit abgespeichert ist, zu verwalten, das heißt insbesondere zu ändern. Weiterhin können mittels dieser Funktionalität Zeitpläne erstellt und geändert werden, die die Verwaltung mehrerer Kommunikationsendgeräte erlaubt. Hierdurch kann beispielsweise nach Geschäftsschluss ausschließlich das privat genutzte Konto bei eingehenden Verbindungsanfragen aktiviert werden. Die Einstellungen, auf die durch die Management-Funktionalität zugegriffen werden kann, sind vorzugsweise auch über eine Web-Schnittstelle zugänglich. An dem Kommunikationsendgerät kann weiterhin ein Überblick über den Status und die Möglichkeiten innerhalb des Profils angezeigt werden. Hilfsprogramme, die bei der Verwaltung unterstützen, so genannte Wizard-Programme, können hierzu auf dem Kommunikationsendgerät vorgesehen sein.

Das wie vorstehend beschriebene erfindungsgemäße System, ebenso wie das nachfolgend noch näher zu beschreibende Verfahren, lassen sich für unterschiedlichste Konstellationen verwenden.

Zunächst ist die Erfindung nicht auf eine bestimmte Anzahl von Kommunikationsendgeräten beschränkt. Ebenso ist die Erfindung nicht auf eine bestimmte Anzahl von Authentifizierungsmitteln, die einem einzelnen Nutzer zugeordnet sind, beschränkt. Darüber hinaus ist die Anzahl der Konten, die in einer Identifizierungseinheit verwaltet werden können, ebenfalls nicht beschränkt. Die logischen Zuordnungen zwischen Kommunikationsendgeräten, Authentifizierungsmitteln und Identifizierungseinheiten/Konten können beliebig variiert werden.

Nachfolgend werden zur Verdeutlichung exemplarisch zwei nicht ausschließliche Fallkonstellationen näher beschrieben.

### Multi-Line Konstellation:

Bei dieser Konstellation werden auf einem einzigen Kommunikationsendgerät mit einem einzigen Authentifizierungsmittel mehrere Konten in einer einzigen Identifizierungseinheit verwaltet. Es besteht die Möglichkeit, für jedes Konto eine eigene Rechnung zu erhalten (Split Bill) oder alle Rechnungen in einer Gesamtrechnung zusammen zu fassen. Diese Konstellation ermöglicht es, unterschiedliche Abrechnungsmodalitäten auf unterschiedliche Konten anzuwenden.

### Multi-Device Konstellation:

Bei dieser Konstellation verfügt ein Nutzer über mehrere (möglicherweise unterschiedliche) Kommunikationsendgeräte (Anzahl = m), beispielsweise ein Mobiltelefon, eine mobile Verbindungskarte und einen Personal Digital Assistant (PDA). Jedes Kommunikationsgerät benötigt dabei ein eigenes Authentifizierungsmittel. Wiederum können für jeden Nutzer ein oder mehrere Konten (Anzahl = n) in einer einzigen Identifizierungseinheit verwaltet werden.

Mit der Erfindung sind beliebige Kombinationen mit der Anzahl von Konten n und der Anzahl von Kommunikationsendgeräten m möglich. Darüber hinaus ist es möglich, dass gewisse Dienste bestimmten Kommunikationsendgeräten zugeordnet sind, wie beispielsweise Sprachdienste für Mobiltelefone und e-mail Funktionalität für PDAs.

Gemäß einem weiteren Aspekt wird die der Erfindung zugrunde liegende Aufgabe gelöst durch ein Verfahren zum Verwalten von Kommunikationsverbindungen in einem Kommunikationsnetzwerk, wobei zumindest eine netzwerkseitige Verwaltungseinrichtung zum Informationsaustausch mit mindestens einem Kommunikationsendgerät, zu dem oder von dem die Kommunikationsverbindung aufgebaut werden soll, ausgelegt istwobei dieses einen Authentifizierungsschritt und einen Identifizierungsschritt umfasst.
Das Verfahren zeichnet sich dadurch aus, dass die Identifikationsdaten in einem Profil abgelegt werden/sind, welches zumindest ein Konto umfasst, und dass in einem Profil mindestens Angaben zu einem Kommunikationsendgerät abgelegt werden/sind.

Durch die Trennung von Authentifizierung und Identifizierung wird es erfindungsgemäß möglich, mit einer Anmeldung bei dem Netzwerk unterschiedliche Kommunikationsverbindungsarten unter gegebenenfalls unterschiedlichen Bedingungen durchzuführen.

Erfindungsgemäß kann die Aktivierung eines Kontos innerhalb eines Profils durch die Authentifizierung mittels des Authentifizierungsmittels, das für die Mobilnummer, die dem Konto zugeordnet ist, vergeben wurde, erfolgen. Bucht sich ein Benutzer also für eine Mobilnummer im Netz ein, so wird das entsprechende Konto aktiviert. Da das Handling der Konten in dem erfindungsgemäßen Verfahren separat von der Authentifizierung erfolgt, können erfindungsgemäß mehrere Konten gleichzeitig aktiviert sein. Die Konten können getrennt voneinander oder gemeinsam inaktiviert werden. So kann beispielsweise nach Feierabend das geschäftliche Konto beziehungsweise die diesem Konto zugeordnete Mobilnummer auf eine Mail-Box umgeleitet werden, während die anderen Konten offen, das heißt aktiv bleiben.

Gemäß einer bevorzugten Ausführungsform bleiben bei der Aktivierung eines Kontos die weiteren Konten aktiviert. Auf diese Weise wird die Erreichbarkeit eines Nutzers erheblich verbessert und die Flexibilität des Nutzers bezüglich von ihm initiierter Kommunikationsverbindungen wird erhöht. Schließlich wird durch die Erfindung ein besseres Erreichbarkeitsmanagement für den Nutzer gewährleistet. Dieser kann unter mehreren Nummern gleichzeitig erreichbar sein. Das harte manuelle Ab- und Anmelden, das im Stand der Technik erforderlich war, wird hierbei bei dem erfindungsgemäßen Verfahren durch ein profil- oder menügesteuertes Einbuchen mit erhöhtem Komfort, ersetzt.

Die Registrierung von Konten, das heißt die Zuordnung von Konten zu einem Profil kann erfindungsgemäß wie folgt durchgeführt werden. Sobald ein Konto aktiviert ist, kann mindestens ein weiteres Konto registriert und somit dem ersten Konto in einem Profil zugeordnet werden. Die Zuordnung kann über das Kommunikationsendgerät oder über die Web-Schnittstelle erfolgen. Das Konto, das einem anderen Konto zugeordnet werden soll, wird beispielsweise durch Angabe der Mobilnummer des zu transferierenden Kontos angegeben. In einem Bestätigungsschritt muss von dem zu transferierenden Konto eine Bestätigung erfolgen. Zu diesem Zeitpunkt ist dann das Authentifizierungsmittel, insbesondere die SIM-Karte, des transferierten Kontos ohne weitere Funktion. Dies bedeutet, dass beim Eingang einer Verbindungsanfrage ausschließlich das in dem Profil abgelegte Konto und die diesem zugeordneten Einstellungen berücksichtigt werden. Das Authentifizierungsmittel wird aber wieder benötigt, sofern das Konto aus dem Profil herausgetrennt werden soll. Wird ein Konto de-registriert, das heißt von einem Profil gelöst, so muss zu dem abzutrennenden Konto ein Authentifizierungsmittel vorhanden sein.

Durch die Möglichkeit des Registrierens und De-Registrierens kann beispielsweise beim Ausscheiden eines Mitarbeiters aus einem Unternehmen dessen berufliches Konto von den anderen Konten getrennt und einem neuen Mitarbeiter in modifizierter Form zur Verfügung gestellt werden. Voraussetzung zum Trennen von Konten, ist, dass ein vom Profil abgetrenntes Konto weiterhin ein Authentifizierungsmittel aufweist, das heißt diesem Konto zugewiesen ist.

Die Bestandteile des erfindungsgemäßen Systems, die als Einheit oder Mittel bezeichnet werden, können erfindungsgemäß vorzugsweise durch Programme realisiert werden.

In dem Identifizierungsschritt werden vorzugsweise die Eigenschaften der Kommunikationsverbindung festgelegt. Die Eigenschaften der Kommunikationsverbindung, die einen Teil der Identifikationsdaten darstellen, sind zusammen mit weiteren Identifikationsdaten vorzugsweise in einem Profil zusammengefasst. Dieses Profil umfasst hierbei mindestens ein Konto, wobei jedem Konto mindestens ein Kommunikationsendgerät zugeordnet ist. So kann beispielsweise eine Einteilung zwischen privaten und beruflichen Verbindungen erfolgen, indem das private oder das berufliche Konto für die Kommunikationsverbindung verwendet wird. Da die Identifizierung netzwerkseitig erfolgt, wird es möglich diese anhand einer großen Anzahl von Informationen durchzuführen. So können beispielsweise Daten auf der Netzwerkseite hinterlegt sein, die eine Beziehung zwischen einer angewählten Telefonnummer und einem bestimmten Konto des Nutzers erzeugen. Wird beispielsweise die eigene Festnetznummer zu Hause als die gewählte Telefonnummer erkannt, so kann dieses Gespräch automatisch einem privaten Konto zugerechnet werden und die Verbindung auch mittels der diesem Konto zugeordneten Mobilnummer erzeugt werden.

Die Authentifizierung erfolgt erfindungsgemäß vorzugsweise mittels eines in das Kommunikationsendgerät lösbar eingebrachten Authentifizierungsmittels, insbesondere einer SIM-Karte.
Nachfolgend wird die Erfindung anhand von Ausführungsbeispielen unter Bezugnahme auf die beiliegenden Zeichnungen näher erläutert. Dabei zeigen:
- Figur 1:: eine schematische Darstellung eines erfindungsgemäßen Systems; und
- Figur 2:: eine schematische Darstellung der Kommunikation zwischen Kommunikationsendgeräten und der Verwaltungseinrichtung.

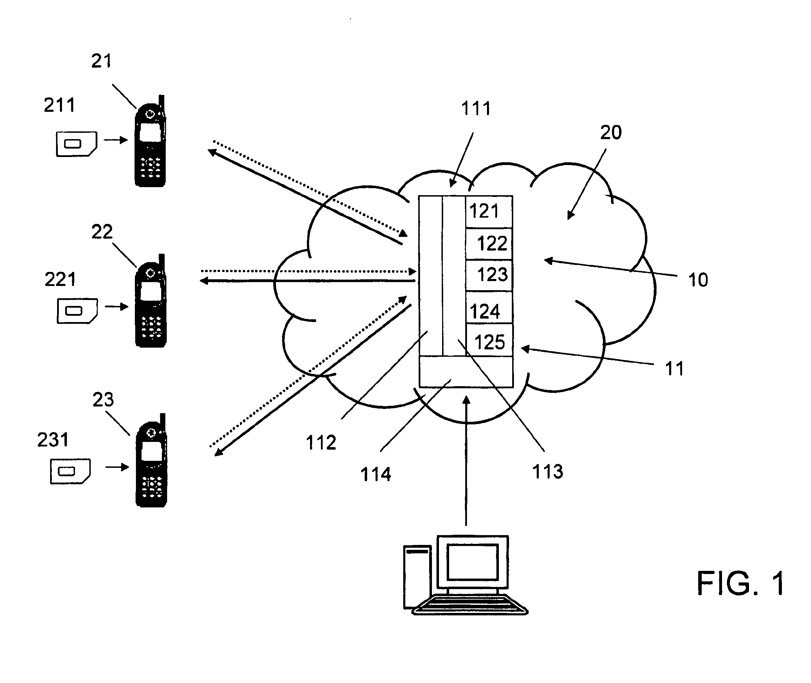

In Figur 1 ist ein Kommunikationsnetzwerk 20, in dem das erfindungsgemäße System 10 verwendet werden kann, schematisch dargestellt. In der Figur 1 wird eine Ausführungsform des Systems 10 gezeigt, bei dem dieses mehrere Kommunikationsendgeräte 21 bis 23 unterstützt. Die Kommunikationsendgeräte 21 bis 23 sollen hierbei einem Benutzer zugeordnet sein (Multi-Device Konstellation). Jedes Kommunikationsendgerät 21 bis 23 ist mit einem Authentifizierungsmittel 211 bis 231, hier einer Chipkarte, insbesondere einer SIM-Karte, ausgestattet. Die Kommunikationsendgeräte 21 bis 23 kommunizieren mit einem sogenannten Connectivity Server oder Application Server 11, der die erfindungsgemäße Verwaltungseinrichtung darstellt.

In dem Connectivity Server 11 ist die Identifizierungseinheit vorgesehen. Diese umfasst in der dargestellten Ausführungsform eine Bearbeitungseinheit 111, in der eine Schnittstelle 112 für eingehende und ausgehende Kommunikationsanfragen vorgesehen ist. Weiterhin ist in der Bearbeitungseinheit 111 eine Steuerungslogik 113 hinterlegt, die der Auswahl von Identifikationsdaten, insbesondere der Auswahl von Konten 121 bis 125 dient.

In Figur 1 sind exemplarisch fünf Konten 121 bis 125 angedeutet. Jedem dieser Konten 121 bis 125 ist eine Rolle, die der Benutzer einnehmen kann, zugeordnet. In der dargestellten Ausführungsform kann beispielsweise das Konto 121 das geschäftliche Konto, das Konto 122 das private Konto und das Konto 123 ein Konto für einen ehrenamtlichen Posten darstellen. Die weiteren Konten 124 und 125 können für weitere Rollen verwendet werden. In den Konten 121 bis 125 sind jeweils Identifikationsdaten hinterlegt. So ist in dem Konto 121 beispielsweise die geschäftliche Mobilnummer des Benutzers, dessen geschäftliche E-mail-Adresse und gegebenenfalls dessen IRC-Nummer hinterlegt. In den weiteren Konten 122 bis 125 sind die für die entsprechende Rolle relevanten Identifikationsdaten hinterlegt.

Weiterhin kann beispielsweise über die Steuerungslogik 113 jedem Konto ein Telefonbuch mit Kontakten zugeordnet sein.

In der dargestellten Ausführungsform ist an dem Connectivity Server 11 eine Web-Schnittstelle 114 vorgesehen. In der Figur 1 ist über diese Schnittstelle 114 ein PC mit dem Connectivity Server 11 verbunden.

In dem Connectivity Server 11 sind hierbei Berechtigungen für den Zugriff über die Schnittstelle 114 hinterlegt. Wählt sich beispielsweise die Sekretärin eines Unternehmens in das Profil eines Mitarbeiters ein, so kann sie - entsprechend ihrer zugewiesenen Berechtigungen - die beruflich und gegebenenfalls ehrenamtlichen Daten der Konten einsehen und bearbeiten, wohingegen die privaten Angaben für sie gegebenenfalls nicht einsehbar sind.

Die Konten 121 bis 125 und deren Einstellungen, beispielsweise Verbindung zu Telefonbucheinträgen, können von dem Benutzer eingerichtet werden.

Geht in der dargestellten Ausführungsform ein geschäftliches Gespräch für den Benutzer ein, so wird dieses über die in dem geschäftlichen Konto 121 hinterlegten Mobilnummer als geschäftlich erkannt. Über die Bearbeitungseinheit 111 wird daraufhin das vom Benutzer für dieses Konto 121 zugewiesene Kommunikationsendgerät, beispielsweise das Kommunikationsendgerät 21, ermittelt und der Anruf entsprechend weitergeleitet.

Wird hingegen von einem Kommunikationsendgerät 21, dem die geschäftliche Mobilnummer zugeordnet ist, ein Gespräch initiiert, so kann erfindungsgemäß, wenn in der Steuerungseinheit 113 erkannt wird, dass es sich um einen Anruf zu einer Nummer handelt, die in einem privaten Telefonbuch hinterlegt ist, das Telefonat dem Konto 122 zugerechnet werden. Somit wird der angerufenen Partei die Mobilnummer des privaten Kommunikationsendgerätes angezeigt und eine Abrechnung erfolgt ebenfalls über dieses private Konto.

Diese Art der Verwaltung von Kommunikationsverbindungen ist erfindungsgemäß möglich, da die Kommunikationsendgeräte zwar über die SIM-Karten 211 bis 231 gegenüber dem Kommunikationswerk authentifiziert werden, die Konten 121 bis 125 allerdings auf dem Connectivity Server 11 verwaltet werden und somit entsprechende Gespräche oder andere Verbindungen zu einem Kommunikationsendgerät geleitet werden und auf diesem verarbeitet werden können. Sind mehrere Konten einem Kommunikationsendgerät zugeordnet, so kann während eines der Konten für ein Gespräch verwendet wird, das heißt das Kommunikationsendgerät besetzt ist, eine Weiterleitung eines weiteren eingehenden Anrufs auf eine Mail-Box erfolgen.

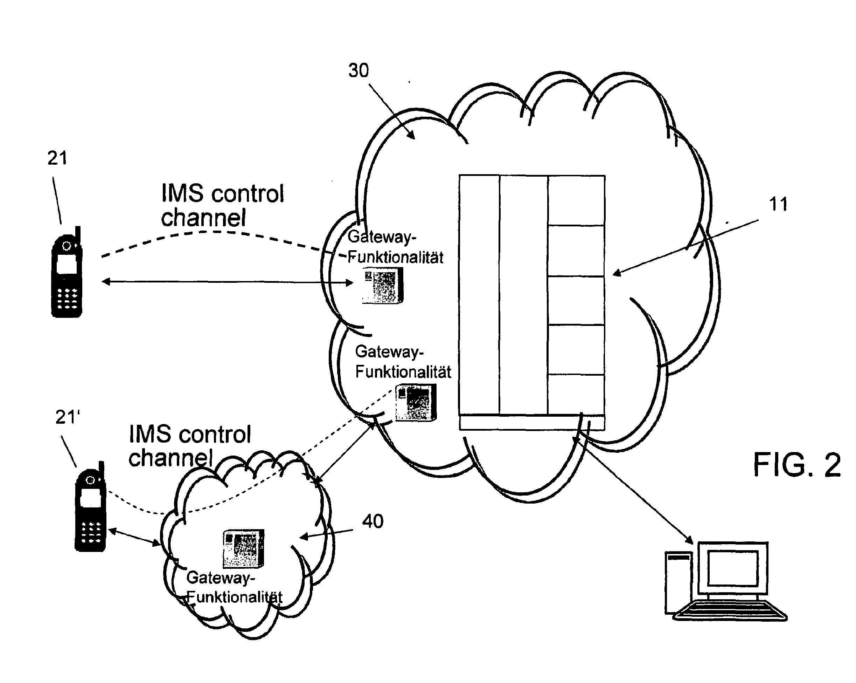

In Figur 2 ist schematisch die logische Zuordnung zwischen Kommunikationsendgeräten und der Verwaltungseinheit in unterschiedlichen Netzen angedeutet.

Im oberen Teil der Figur 2 ist das Kommunikationsendgerät 21 des Nutzers im Heimnetz 30 registriert. Dabei handelt es sich bei dem Heimnetz 30 um ein UMTS-Netzwerk, so dass in der Kommunikationsverbindung zu dem Kommunikationsendgerät 21 IMS-Steuerkanäle zur Verfügung stehen.

Im unteren Teil von Figur 2 ist das Kommunikationsendgerät 21' des roamenden Nutzers in einem Fremdnetz 40 registriert. Der gesamte Verkehr wird hierbei in das Heimnetz 30 zurückgeleitet und ermöglicht somit die erfindungsgemäße Ausführung. Es ist daher nicht notwendig, gesonderte Ausführungsformen für fremde Netzwerke zu erstellen. Auf diese Weise kann der in dem Heimnetz 30 vorgesehene Connectivity Server 11 auch für die Kommunikation mit anderen Netzwerken verwendet werden, ohne diesen den entsprechenden Netzwerk-Protokollen anpassen zu müssen, sofern diese Fremdnetze ebenfalls dem UMTS-Standard folgen. Sofern dies nicht der Fall ist, ist die vorliegende Erfindung dennoch durchführbar. In diesem Fall muß der Connectivity Server 11 des Heimnetzes 30 derart ausgestaltet sein, dass er wesentliche Funktionalitäten stellvertretend für das Kommunikationsendgerät zur Verfügung stellen kann.

Die vorliegende Erfindung kann neben den bereits beschriebenen Verwendungsarten auch für Freiberufler von Nutzen sein, da diese die einzelnen Konten unterschiedlichen Auftraggebern zuordnen können. Dies ist zum einen bezüglich der notwendigen Geheimhaltungsverpflichtung des Freiberuflers und zum anderen bei der Aufteilung der Kosten hilfreich.

Die vorliegende Erfindung schafft die Möglichkeit einer bedingten gleichzeitigen Anwendung sämtlicher Kommunikationsarten und Services, z.B. Rich Voice, Messaging Dienste (SMS, EMS, MMS), GPRS Datenverbindungen, Internet und sonstige Datendienste, wie Gaming und Location Based Services von unterschiedlichen Konten. Weiterhin wird deren abrechnungstechnische Zuordnung zu unterschiedlichen Konten ermöglicht.

Mit der vorliegenden Erfindung wird sowohl die Erreichbarkeit und Administrierbarkeit für ankommende als auch abgehende Gespräche/Verbindungen/Datendienste ermöglicht.

Vorteil der vorliegenden Erfindung ist somit die komfortable Möglichkeit der Nutzung mobiler Dienste, die sowohl Sprach- als auch Datendienste und die Kombination derer darstellen können. Weiterhin wird eine sehr einfache und benutzerfreundliche Trennung zwischen unterschiedlichen Konten ermöglicht, die weit über die reine Trennung von Abrechnungen hinausgehen kann. Aber auch die Kostentransparenz bleibt bei der Erfindung bestehen.

## Patentansprüche

1. System zur Verwaltung von Kommunikationsverbindungen in einem Kommunikationsnetzwerk (20, 30), wobei das System (10) zumindest eine netzwerkseitige Verwaltungseinrichtung (11) aufweist, die zum Informationsaustausch mit mindestens einem Kommunikationsendgerät (21-23), zu dem oder von dem die Kommunikationsverbindung aufgebaut werden soll, ausgelegt ist, wobei das System (10) mindestens ein Authentifizierungsmittel (211, 221, 231) und mindestens eine Identifizierungseinheit (111, 121-125) mit einer Speichervorrichtung für Identifizierungsdaten aufweist, wobei das mindestens eine Authentifizierungsmittel (211, 221, 231) mindestens einem Kommunikationsendgerät (21, 22, 23) zugeordnet ist und die mindestens eine netzwerkseitige Verwaltungseinrichtung (11) die mindestens eine Identifizierungseinheit (111, 121-125) umfasst, **dadurch gekennzeichnet, dass** die Identifizierungsdaten Angaben zu Kommunikationsendgeräten oder Angaben bezüglich des Benutzers und Angaben zu Kommunikationsendgeräten darstellen, und wobei die ldentifizierungsdaten in einem Profil abgelegt sind und das Profil mehrere Konten (121-125) umfasst.

2. System nach Anspruch 1 **dadurch gekennzeichnet, dass** die Identifizierungseinheit (111, 121-125) zur Festlegung von Eigenschaften einer aufzubauenden Kommunikationsverbindung dient.

3. System nach einem der Ansprüche 1 oder 2, **dadurch gekennzeichnet, dass** das Profil zumindest Angaben zu mindestens einem Kommunikationsendgerät (21, 22, 23) umfasst.

4. System nach einem der Ansprüche 1 bis 3, **dadurch gekennzeichnet, dass** das Profil in einer Matrix organisiert ist.

5. System nach einem der Ansprüche 1 bis 4, **dadurch gekennzeichnet, dass** die Identifizierungseinheit (111, 121-125) eine Bearbeitungseinheit (111) zum Bearbeiten eingehender und ausgehender Kommunikationsverbindungsanfragen und zur Auswahl von Identifizierungsdaten umfasst.

6. System nach Anspruch 5, **dadurch gekennzeichnet, dass** in der Bearbeitungseinheit (111) eine Steuerungslogik (113) vorgesehen ist.

7. System nach einem der Ansprüche 1 bis 6, **dadurch gekennzeichnet, dass** die Verwaltungseinrichtung (11) zumindest eine Schnittstelle (114) zur Verbindung mit einem anderen Kommunikationsnetz, insbesondere mit dem Internet aufweist.

8. System nach einem der Ansprüche 1 bis 7, **dadurch gekennzeichnet, dass** das Authentifizierungsmittel (211, 221, 231) eine Chip-Karte, insbesondere eine SIM-Karte, darstellt.

9. System nach einem der Ansprüche 1 bis 8, **dadurch gekennzeichnet, dass** ein Bestandteil des Kommunikationsnetzwerks (20) als Mobilfunknetz, insbesondere als UMTS-Netz, ausgebildet ist.

10. Verfahren zum Verwalten von Kommunikationsverbindungen in einem Kommunikationsnetzwerk, wobei zumindest eine netzwerkseitige Verwaltungseinrichtung zum Informationsaustausch mit mindestens einem Kommunikationsendgerät, zu dem oder von dem die Kommunikationsverbindung aufgebaut werden soll, ausgelegt ist, wobei dieses einen Authentifizierungsschritt und einen Identifizierungsschritt umfasst, wobei die Authentifizierung und die Identifizierung über unterschiedliche Mittel erfolgt und die Identifizierung netzwerkseitig erfolgt, **dadurch gekennzeichnet, dass** die Identifikationsdaten in einem Profil abgelegt werden/sind, welches mehrere Konten umfasst, und dass in einem Profil mindestens Angaben zu einem Kommunikationsendgerät abgelegt werden/sind.

11. Verfahren nach Anspruch 10, **dadurch gekennzeichnet, dass** in dem Identifizierungsschritt die Eigenschaften der Kommunikationsverbindung festgelegt werden.

12. Verfahren nach Anspruch 11, **dadurch gekennzeichnet, dass** die Eigenschaften der Kommunikationsverbindung zumindest Angaben bezüglich des Benutzers und/oder des Kommunikationsendgerätes darstellen.

13. Verfahren nach einem der Ansprüche 10 bis 12, **dadurch gekennzeichnet, dass** die Konten eines Profils einzeln aktiviert und inaktiviert werden können.

14. Verfahren nach einem der Ansprüche 10 bis 13, **dadurch gekennzeichnet, dass** die Authentifizierung mittels eines in dem Kommunikationsendgerät eingebrachten Authentifizierungsmittels, insbesondere einer SIM-Karte, erfolgt.

15. Verfahren nach einem der Ansprüche 10 bis 14, **dadurch gekennzeichnet, dass** es sich bei einem Bestandteil des Kommunikationsnetzwerks um ein Mobilfunknetz, insbesondere das UMTS-Netz, handelt.

## Claims

1. System for managing communication connections in a communications network (20, 30), wherein the system (10) has at least one managing device (11) on the network side which is designed for exchanging information with at least one communications terminal (21-23) to which or from which the communications connection is to be made, the system (10) having at least one authenticating device (211, 221, 231) and at least one identification unit (111, 121-125) with a memory device for identification data, the at least one authenticating device (211, 221, 231) being associated with at least one communications terminal (21, 22, 23) and the at least one managing device (11) on the network side comprising the at least one identification unit (111, 121-125), **characterised in that** the identification data are data on communications terminals or data relating to the user and data on communications terminals, and wherein the identification data are stored in a profile and the profile encompasses a plurality of accounts (121-125).

2. System according to claim 1, **characterised in that** the identification unit (111, 121-125) serves to establish the properties of a communications connection that is to be made.

3. System according to one of claims 1 or 2, **characterised in that** the profile at least comprises data relating to at least one communications terminal (21, 22, 23).

4. System according to one of claims 1 to 3, **characterised in that** the profile is organised in a matrix.

5. System according to one of claims 1 to 4, **characterised in that** the identification unit (111, 121-125) comprises a processing unit (111) for processing incoming and outgoing communications connection enquiries and for selecting identification data.

6. System according to claim 5, **characterised in that** a control logic (113) is provided in the processing unit (111).

7. System according to one of claims 1 to 6, **characterised in that** the managing device (11) has at least one interface (114) for connection with another communications network, particularly with the Internet.

8. System according to one of claims 1 to 7, **characterised in that** the authenticating device (211, 221, 231) is a chip card, particularly a SIM card.

9. System according to one of claims 1 to 8, **characterised in that** part of the communications network (20) is in the form of a mobile telephone network, particularly a UMTS network.

10. Method of managing communications connections in a communications network, wherein at least one managing device on the network side is designed for the exchange of information with at least one communications terminal to which or from which the communications connection is to be made, this method comprising an authentication step and an identification step, the authentication and identification being carried out by different methods and the identification being carried out on the network side, **characterised in that** the identification data are or have been stored in a profile that encompasses a plurality of accounts, and **in that** data relating to a communications terminal are or have been stored in a profile.

11. Method according to claim 10, **characterised in that** the properties of the communications connection are established in the identification step.

12. Method according to claim 11, **characterised in that** the properties of the communications connection at least constitute data relating to the user and/or the communications terminal.

13. Method according to one of claims 10 to 12, **characterised in that** the accounts of a profile can be individually activated and deactivated.

14. Method according to one of claims 10 to 13, **characterised in that** the authentication is carried out using an authenticating device, particularly a SIM card, inserted in the communications terminal.

15. Method according to one of claims 10 to 14, **characterised in that** one component of the communications network is a mobile telephone network, particularly the UMTS network.

## Revendications

1. Système d'administration de connexions de communication dans un réseau de communication (20, 30), le système (10) comportant au moins un dispositif d'administration (11) du côté du réseau, lequel dispositif est conçu pour l'échange d'informations avec au moins un terminal de communication (21-23), vers lequel ou à partir duquel la connexion de communication doit être établie, le système (10) comportant au moins une unité d'authentification (211, 221, 231) et au moins une unité d'identification (111, 121-125) avec un dispositif de stockage pour les données d'identification, au moins un moyen d'authentification (211, 221, 231) étant affecté au moins à un terminal de communication (21, 22, 23) et au moins un dispositif d'administration (11) du côté du réseau comprend au moins une unité d'identification (111, 121-125), **caractérisé en ce que** les données d'identification représentent des indications sur les terminaux de communication ou des indications liées à l'utilisateur et des indications sur les terminaux de communication, et les données d'identification étant enregistrées dans un profil et le profil comprenant plusieurs comptes (121-125).

2. Système selon la revendication 1, **caractérisé en ce que** l'unité d'identification (111, 121-125) sert à définir les propriétés d'une connexion de communication à établir.

3. Système selon l'une quelconque des revendications 1 ou 2, **caractérisé en ce que** le profil comprend au moins des indications sur au moins un terminal de communication (21, 22, 23).

4. Système selon l'une quelconque des revendications 1 à 3, **caractérisé en ce que** le profil est organisé sous forme de matrice.

5. Système selon l'une quelconque des revendications 1 à 4, **caractérisé en ce que** l'unité d'identification (111, 121-125) comprend une unité de traitement (111) pour traiter les demandes de connexion de communication entrantes et sortantes et pour sélectionner les données d'identification.

6. Système selon la revendication 5, **caractérisé en ce qu'**une logique de commande (113) est prévue dans l'unité de traitement (111).

7. Système selon l'une quelconque des revendications 1 à 6, **caractérisé en ce que** le dispositif d'administration (11) comporte au moins une interface (114) pour connexion avec un autre réseau de communication, plus particulièrement avec Internet.

8. Système selon l'une quelconque des revendications 1 à 7, **caractérisé en ce que** le moyen d'authentification (211, 221, 231) représente une carte à puce, plus particulièrement une carte SIM.

9. Système selon l'une quelconque des revendications 1 à 8, **caractérisé en ce qu'**un élément du réseau de communication (20) est conçu comme réseau de téléphonie mobile, plus particulièrement comme réseau UMTS.

10. Procédé d'administration de connexions de communication dans un réseau de communication, au moins un dispositif d'administration du côté du réseau étant conçu pour l'échange d'informations avec au moins un terminal de communication, duquel ou à partir duquel la connexion de communication doit être établie, ce procédé comprenant une étape d'authentification et une étape d'identification, l'authentification et l'identification ayant lieu par le biais de différents moyens et l'identification étant effectuée du côté du réseau, **caractérisé en ce que** les données d'identification sont enregistrées dans un profil, lequel comprend plusieurs comptes, et **en ce que** au moins des indications sur le terminal de communication sont enregistrées dans le profil.

11. Procédé selon la revendication 10, **caractérisé en ce que** les propriétés de la connexion de communication sont définies dans l'étape d'identification.

12. Procédé selon la revendication 11, **caractérisé en ce que** les propriétés de la connexion de communication représentent au moins des indications sur l'utilisateur et/ou le terminal de communication.

13. Procédé selon l'une quelconque des revendications 10 à 12, **caractérisé en ce que** les comptes d'un profil peuvent être activés et désactivés individuellement.

14. Procédé selon l'une quelconque des revendications 10 à 13, **caractérisé en ce que** l'authentification a lieu à l'aide d'un moyen d'authentification placé dans le terminal de communication, plus particulièrement dans une carte SIM.

15. Procédé selon l'une quelconque des revendications 10 à 14, **caractérisé en ce que** l'élément du réseau de communication est un réseau de téléphonie mobile, plus particulièrement un réseau UMTS.
